Europäisches Patentamt

European Patent Office

Office européen des brevets

(19)

(11) **EP 1 193 826 A2**

(12) **EUROPÄISCHE PATENTANMELDUNG**

(43) Veröffentlichungstag:
   **03.04.2002  Patentblatt 2002/14**

(51) Int Cl.[7]: **H02K 1/27**

(21) Anmeldenummer: **01119338.0**

(22) Anmeldetag: **10.08.2001**

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(30) Priorität: **23.08.2000  DE 10041329**

(71) Anmelder: **SIEMENS AKTIENGESELLSCHAFT
   80333 München (DE)**

(72) Erfinder: **Huth, Gerhard, Prof.
   97618 Leutershausen (DE)**

(54) **Permanentmagneterregter Läufer für einen permanentmagneterregten elektrischen Antrieb, insbesondere für AC-Hauptantriebe**

(57)   Zur Realisierung eines konstanten Leistungsbereiches durch Feldschwächung bei einem permanentmagneterregten Antrieb wird der magnetische Querwiderstand ($Rm$) des Läuferblechpaketes durch Pollücken (P1,P2) erhöht, welche in die Oberfläche (O) des Läuferblechschnitts (L) gefräst werden oder in den Läuferblechschnitt L gestanzt werden, wobei sich eine Polbedeckung $\tau_p$ von 70-80% als besonders vorteilhaft erwiesen hat.

## FIG 1

EP 1 193 826 A2

**Beschreibung**

Die Erfindung bezieht sich auf einen permanentmagneterregten Läufer für einen elektrischen Antrieb mit einem Läuferblechpaket und Permanentmagneten.

Von Arbeitsmaschinen wie z.B. Werkzeugmaschinen erwartet man heute im Bereich kleinerer Drehzahlen eine mit der Drehzahl linear ansteigende Leistung. Ab der Nenndrehzahl wird dann bis zur maximalen Drehzahl eine konstante Leistung vom AC-Motor erwartet.

AC-Hauptantriebe werden in der Regel überwiegend als Asynchronmaschinen ausgeführt, welche die obengenannte erste Bedingung bis zur Nenndrehzahl erfüllen. Auch die zweite Bedingung ab der Nenndrehzahl lässt sich mit der Asynchrontechnik einfach erfüllen, da der Luftspaltfluss direkt über Ausgangsspannung eines Umrichters beeinflusst und geschwächt werden kann.

Jedoch gewinnt im Bereich der Hauptantriebe zunehmend auch der permanentmagneterregte AC-Motor an Bedeutung, vor allem weil dieser eine höhere Leistungsdichte und damit verbunden einen kompakteren Motoraufbau ermöglicht.

Probleme ergeben sich beim Ersatz von Hauptantrieben in Asynchrontechnik durch permanentmagneterregte Motoren vor allem bei der Realisierung des Konstantleistungsbereichs ab der Nenndrehzahl. Die Erfüllung dieser Bedingung ist bei einem permanentmagneterregten Motor ungleich schwieriger und aufwendiger zu erfüllen.

Die Wirksamkeit der Feldschwächung von permanenterregten Hauptantrieben ist stark abhängig vom Design des Blechschnitts des Läufers, wobei für die Induktivitäten in Längsachse (d) und Querachse (q) folgende Bedingungen anzustreben sind:

$$L_q \text{ möglichst klein}$$
$$L_d \text{ möglichst groß} \qquad (1)$$
$$L_q < L_d$$

Aufgabe der vorliegenden Erfindung ist es daher, einen Läuferblechschnitt zu entwickeln, der die obigen Bedingungen in technischer Hinsicht, aber auch in wirtschaftlicher Hinsicht erfüllt.

Gemäß der vorliegenden Erfindung wird diese Aufgabe durch einen permanentmagneterregten Läufer für einen elektrischen Antrieb mit einem Läuferblechpaket und Permanentmagneten gelöst, indem der Läuferblechschnitt zur Erhöhung des magnetischen Querwiderstandes für die Querachse des Läufers mit Pollücken versehen ist.

Bei größeren Achshöhen hat es sich als technisch vorteilhaft erwiesen, die Magnete am Luftspalt und nicht im Läuferblechschnitt anzuordnen, indem die Permanentmagneten auf der Oberfläche des Läuferblechs so angeordnet sind, dass diese bei Montage des Läufers in einem Ständer am Luftspalt zwischen Läufer und Ständer liegen. Dadurch wird unter anderem eine höhere Aktivteilausnutzung erreicht.

Aus Gründen der Ausnutzung und eines besseren Oberfeldverhaltens sind die Pollücken vorteilhafterweise derart ausgeführt, dass eine Polbedeckung der Oberfläche des Läuferblechs mit Permanentmagneten zwischen 70% und 80% vorliegt.

Nach einer weiteren vorteilhaften Ausführung der Erfindung übersteigt die Tiefe der Pollücken im Läuferblech die Breite des Luftspalts zwischen dem in einem Ständer montierten Läufer und dem Ständer.

Weiterhin vorteilhaft ist es, wenn die Pollücken äquidistant im Läuferblechpaket angeordnet sind.

Für die Herstellung ist es günstig, wenn die Pollücken direkt am Luftspalt angeordnet sind, insbesondere in die Oberfläche des Läuferblechpaketes gefräst sind.

Alternativ können die Pollücken verdeckt im Läuferblechschnitt angeordnet werden, insbesondere in das Läuferblechpaket gestanzt werden.

Weiterhin können die Pollücken mit einem amagnetischen Material gefüllt sein. Dies kann durch Füllkörper wie etwa Kunststoffstäbe geschehen oder aber auch durch Ausgießen der Pollücke mit einem amagnetischen Füllstoff.

Mit dem Konzept der Erfindung lässt sich ein permanentmagneterregter elektrischer Antrieb mit einem Ständer mit einer dreisträngigen Drehfeldwicklung einer vorgegebenen Polpaarzahl und mit einem erfindungsgemäßen Läufer mit gleicher Polpaarzahl konstruieren, der die eingangs angeführten Bedingungen für einen Hauptantrieb erfüllt, indem dieser durch Feldschwächung bei veränderlicher Drehzahl in einem Bereich konstanter Leistung betreibbar ist.

Weitere Einzelheiten und vorteilhafte Details ergeben sich anhand der im folgenden beschriebenen Ausführungsbeispiele und in Verbindung mit den Figuren. Es zeigt:

FIG 1   Abwicklung eines Läufers nach der Erfindung mit offener Pollücke direkt am Luftspalt,

FIG 2   Ausschnitt aus FIG 1 mit durch einen amagnetischen Füllkörper gefüllter Pollücke,

FIG 3   Darstellung wie in FIG 2, jedoch eine Variante mit durchgängiger Permanentmagnetbestükkung,

FIG 4   Abwicklung eines Läufers nach der Erfindung mit verdeckter Pollücke im Läuferblechschnitt,

FIG 5   Ausschnitt aus FIG 4, jedoch in der Pollücke nicht magnetbestückt und

FIG 6   Variante eines Läufers nach der Erfindung mit verdeckter Pollücke.

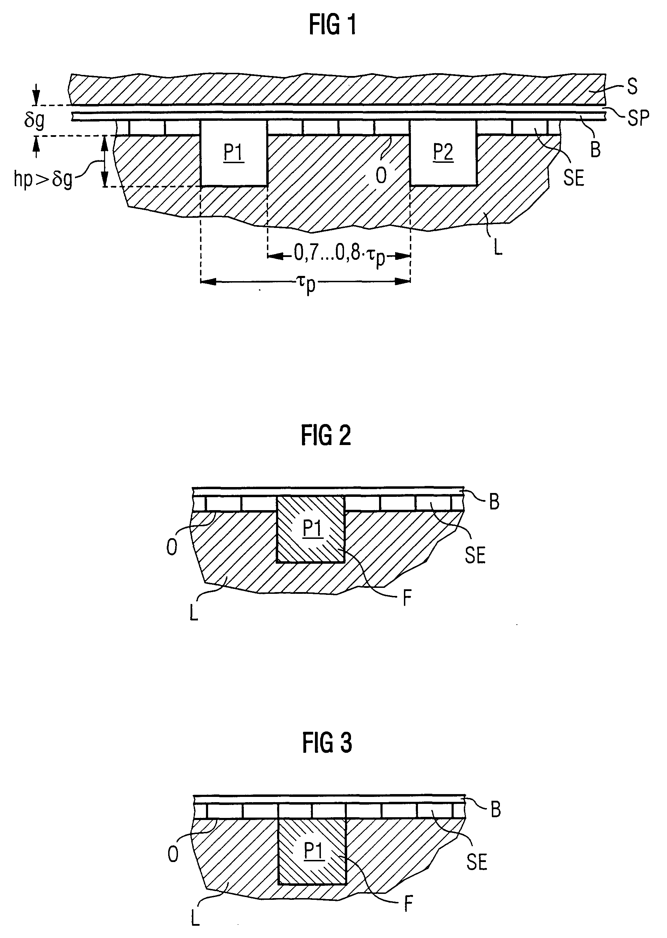

In der Darstellung nach FIG 1 ist eine ausschnittsweise Abwicklung eines Läufers (Längsschnitt) nach der Erfindung mit offenen Pollücken P1, P2 direkt am Luftspalt SP gezeigt. Der Luftspalt SP zwischen dem Ständer S und dem Läuferblech L besitzt die Breite $\delta_g$. Die Pollücken P1 und P2 sind direkt am Luftspalt SP in das Läuferblechpaket gefräst oder gestanzt und haben beispielsweise einen rechteckigen Querschnitt, wobei die Tiefe $h_p$ der Pollücken gegenüber der Breite $\delta_g$ des Luftspalts SP vorteilhafterweise groß bemessen ist nach:

$$h_p > \delta_g \qquad (2)$$

Um die Bedingung der eingangs angeführten Gleichung (1) zu erfüllen, soll erfindungsgemäß der magnetische Querwiderstand vergrößert werden. Im magnetischen Kreis ist der magnetische Fluss proportional abhängig von der magnetischen Spannung und wird begrenzt durch den magnetischen Widerstand Rm. Der magnetische Widerstand Rm wiederum wird durch die Materialkonstante des Läuferblechs L und durch dessen geometrische Abmessungen bestimmt.

Erfindungsgemäß wird durch eine Pollücke P1, P2 als Effekt der magnetische Widerstand Rm für die Querachse bzw. q-Achse vergrößert, wobei aus Gründen der Ausnutzung und des Oberfeldverhaltens als technisches Optimum die Polbedeckung $\tau_p$ mit Permanentmagneten SE zwischen 70% und 80% betragen sollte.

In der Darstellung in FIG 1 ist dieser Zusammenhang dadurch zum Ausdruck gebracht, dass der Abstand $\tau_p$ zwischen - in der Regel äquidistanten - Pollücken P1 und P2 so bemessen ist, dass etwa die erwähnten 70-80% der Oberfläche des Läuferblechpaketes L mit Permanentmagneten SE bedeckt sind. Dies sind genau der zwischen zwei Pollücken liegenden Stege, also die eigentliche Pole. Aus Schutzgründen ist die gesamte Außenfläche bzw. Oberfläche O des Läufers oberhalb der Permanentmagnete SE mit einer zusätzlichen Bandage B ummantelt.

Die Anordnung der Permanentmagnete SE am Luftspalt SP beruht auf der Erkenntnis, dass bei größeren Achshöhen technische Vorteile im Hinblick auf eine höhere Aktivteilausnutzung gegenüber einer Einbettung der SE-Magnete im Läuferblechschnitt L bestehen. Jedoch lässt sich die Erfindung auch mit im Läuferblechschnitt L eingebetteten SE-Magneten realisieren.

Die Darstellung nach FIG 2 zeigt einen Ausschnitt von FIG 1 im Läuferblechschnitt L um die Pollücke P1, wobei diese durch einen amagnetischen Füllkörper F ausgefüllt ist. Das gleiche gilt für weitere, nicht gezeigte Pollücken, wobei der Füllkörper beispielsweise in Form eines Kunststoffstabes eingebracht wird oder aber die Pollücke vergossen wird.

In der Darstellung nach FIG 3 ist der gleiche Ausschnitt wie in FIG 2 gezeigt, jedoch ist die Außenfläche O des Läufers unterhalb der Bandage B voll mit SE-Magneten bestückt. Das vorangehend als vorteilhaft herausgestellte Verhältnis einer Polbedeckung von 70-80% ist jedoch auch in diesem Fall gewährleistet, weil sich in der Pollücke P1 und anderen Pollücken unterhalb der darüber angeordneten SE-Magneten Luft oder - wie in FIG 3 gezeigt - ein amagnetischer Füllkörper F befindet. Dies hat zur Folge, dass in diesem Bereich die SE-Magnete nicht dieselbe Wirkung entfalten können wie direkt über den Polen.

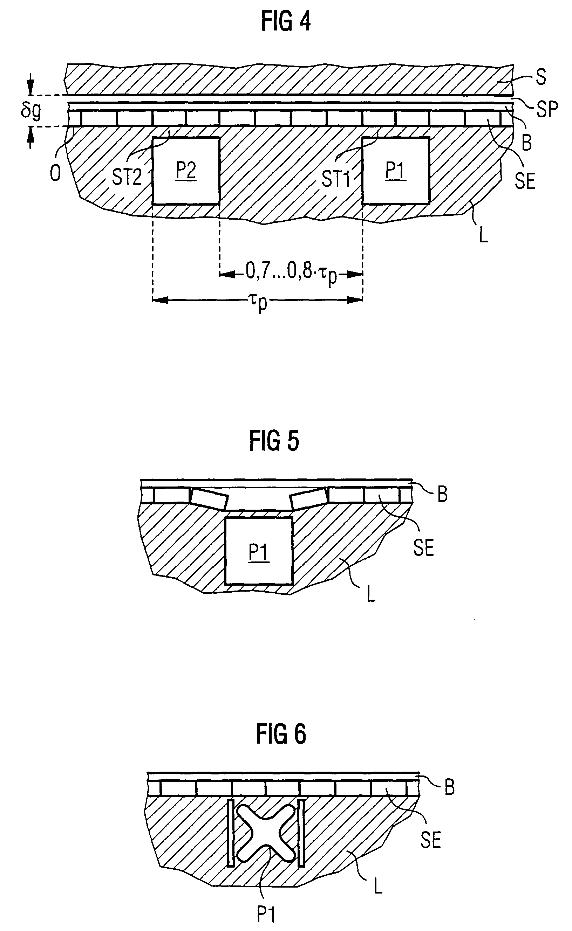

Nach einer alternativen Ausführungsform, wie sie in der Darstellung nach FIG 4 gezeigt ist, sind die Pollücken P1, P2 verdeckt im Läuferblechschnitt L angeordnet. Dies geschieht z.B. durch ein entsprechendes Stanzen des Läuferblechs L.

Die Darstellung nach FIG 4 entspricht weitgehend der nach FIG 1, jedoch ist konstruktionsbedingt die Oberfläche O des Läufers stetig, weil über den Pollücken P1, P2 Stege ST1, ST2 aus Läuferblech liegen. Im in FIG 4 gezeigten Ausführungsbeispiel ist außerdem - wie im in FIG 3 gezeigten Fall - die Läuferoberfläche O mit SE-Magneten vollbestückt.

Für den beispielsweise ausgestanzten Querschnitt der Pollücken P1, P2 gilt ebenfalls die voranstehende Bedingung (2).

FIG 5 zeigt ausschnittsweise eine Ausführungsform, welche sich von der nach FIG 4 dadurch unterscheidet, dass die Bereiche über den Pollücken nicht mit SE-Magneten bestückt sind.

Selbstverständlich sind neben den in den vorangehend beschriebenen Figuren FIG 1 bis FIG 5 gezeigten rechteckförmigen Querschnitten der Pollücken P1, P2 auch andere geometrische Formen denkbar, wobei jedoch darauf zu achten ist, dass vorteilhafterweise die Bedingung (2) erfüllt bleibt. FIG 6 zeigt eine mögliche alternative Querschnittsform am Beispiel eines gestanzten Kreuzes mit links und rechts liegenden Schlitzen. Selbstverständlich sind dem Fachmann vielzählige andere, ebenfalls geeignete Querschnittsformen zur Realisierung von Pollücken nach der Erfindung geläufig.

**Patentansprüche**

1. Permanentmagneterregter Läufer für einen elektrischen Antrieb mit einem Läuferblechpaket und Permanentmagneten (SE), **dadurch gekennzeichnet, dass** der Läuferblechschnitt (L) zur Erhöhung des magnetischen Querwiderstandes ($Rm_q$) für die Querachse (q) des Läufers mit Pollücken (P1, P2) versehen ist.

2. Permanentmagneterregter Läufer nach Anspruch 1, **dadurch gekennzeichnet, dass** die Permanentmagneten (SE) des Läufers auf der Oberfläche des Läuferblechs so angeordnet sind, dass diese (SE) bei Montage des Läufers in einem Ständer (S) am Luftspalt (SP) zwischen Läufer und Ständer liegen.

3. Permanentmagneterregter Läufer nach Anspruch 2, **dadurch gekennzeichnet, dass** die Pollücken (P1, P2) derart angebracht sind, dass eine Polbedeckung ($\tau_p$) der Oberfläche (O) des Läuferblechs mit Permanentmagneten (SE) zwischen 70% und 80% vorliegt.

4. Permanentmagneterregter Läufer nach einem der vorangehenden Ansprüche, **dadurch gekennzeichnet, dass** die Tiefe (hp) der Pollücken (P1, P2) im Läuferblech die Breite des Luftspalts ($\delta_g$) zwischen dem in einem Ständer (S) montierten Läufer und dem Ständer (S) übersteigt.

5. Permanentmagneterregter Läufer nach einem der vorangehenden Ansprüche, **dadurch gekennzeichnet, dass** die Pollücken (P1, P2) äquidistant im Läuferblechpaket (L) angeordnet sind.

6. Permanentmagneterregter Läufer nach einem der vorangehenden Ansprüche, **dadurch gekennzeichnet, dass** die Pollücken (P1, P2) direkt am Luftspalt ($\delta_g$) angeordnet sind, insbesondere in die Oberfläche (O) des Läuferblechpaketes (L) gefräst oder gestanzt sind.

7. Permanentmagneterregter Läufer nach einem der vorangehenden Ansprüche 1 bis 5, **dadurch gekennzeichnet, dass** die Pollücken (P1,P2) verdeckt im Läuferblechschnitt (L) angeordnet sind, insbesondere in das Läuferblechpaket gestanzt sind.

8. Permanentmagneterregter Läufer nach einem der vorangehenden Ansprüche, **dadurch gekennzeichnet, dass** die Pollücken (P1, P2) mit einem amagnetischen Material (F) gefüllt sind.

9. Permanentmagneterregter elektrischer Antrieb mit einem Ständer (S) mit einer dreisträngigen Drehfeldwicklung einer vorgegebenen Polpaarzahl (p) und mit einem Läufer nach einem der vorangehenden Ansprüche mit gleicher Polpaarzahl (p).

10. Permanentmagneterregter elektrischer Antrieb nach Anspruch 9, **dadurch gekennzeichnet, dass** dieser durch Feldschwächung bei veränderlicher Drehzahl in einem Bereich konstanter Leistung betreibbar ist.

## FIG 1

## FIG 2

## FIG 3

## FIG 4

$$0{,}7\ldots0{,}8\cdot\tau_p$$

$$\tau_p$$

## FIG 5

## FIG 6